# FASCICULE DE BREVET EUROPEEN

(11) **EP 4 347 323 B1**
(45) Date de publication et mention de la délivrance du brevet: **19.02.2025**
(21) Numéro de dépôt: 22733198.0
(22) Date de dépôt: 27.05.2022
(51) Int. Cl.: B60R 22/14

(54) **HARNAIS DE MAINTIEN À BOITIER DE SÉCURITÉ, ET MÉTHODES DE SÉCURISATION ET DE LIBÉRATION SUR LA BASE D'UN TEL HARNAIS**
HALTEGURT MIT SICHERHEITSBOX UND VERFAHREN ZUM BEFESTIGEN UND LÖSEN AUF BASIS SOLCH EINES GURTS
RESTRAINING HARNESS HAVING A SAFETY BOX, AND METHODS FOR SECURING AND RELEASING ON THE BASIS OF SUCH A HARNESS

(30) Priorité: 27.05.2021 FR 2105522
(43) Date de publication de la demande: 10.04.2024
(73) Titulaire: Access-Ability, 80490 Hocquincourt (FR)
(72) Inventeur: DUMEIGE, Samuel, 80490 Hocquincourt (FR)
(74) Mandataire: Yes My Patent
(86) Numéro de dépôt international: PCT/FR2022/051004
(87) Numéro de publication internationale: WO 2022/248810

(56) Documents cités:
- WO-A1-2013/059921
- WO-A1-92/14627
- WO-A2-2005/037605
- US-A- 3 321 247
- US-A- 4 834 460
- US-A1- 2004 169 411
- US-A1- 2009 079 252
- US-A1- 2010 109 416
- US-A1- 2019 270 426

## Description

L'invention se rapporte au domaine des systèmes de maintien d'utilisateur sur un siège de véhicule.

Ce domaine inclut des harnais de maintien pour voiture, généralement utilisés pour assurer un maintien postural (maintien du tronc), et principalement pour maintenir les personnes souffrant d'un trouble du comportement sur leur siège.

L'art antérieur a proposé des solutions n'étant pas pleinement satisfaisantes.

Un système proposé dans l'art antérieur concerne un harnais de maintien à sangles, associé à un système de fermeture à clé dans un plastron en avant de l'utilisateur attaché. Ces systèmes sont souvent livrés avec un coupe sangle pour les cas de besoin de libération rapide de l'utilisateur attaché.

Ce produit ne répond pas pleinement aux attentes des utilisateurs. En effet, il est problématique en cas d'évacuation en urgence du véhicule. En cas d'incendie par exemple, trop de temps serait nécessaire pour déverrouiller et évacuer la personne au moyen de la clé.

Par ailleurs, le coupe sangle fournit avec le produit est souvent égaré ou pas porté de main une fois en situation d'urgence. De plus, couper les sangles rendrait ce harnais non réutilisable.

Le document d'art antérieur US2019270426A1 décrit un harnais de maintien pour siège de véhicule, comprenant une section d'emmanchement de dossier (11, 12, 18a, 18b, 20, 21) configurée pour emmancher un dossier de siège (22a) de véhicule, et une section d'emmanchement postural (14) configurée pour emmancher un tronc d'utilisateur de sorte à maintenir l'utilisateur sur le siège (22a). La section d'emmanchement postural (14) est solidaire de la section d'emmanchement de dossier (11, 12, 18a, 18b, 20, 21). Le harnais de maintien comprend en outre un système de verrouillage (18, 18a, 18b) configuré pour recevoir une partie de la section d'emmanchement de dossier (11, 12, 18a, 18b, 20, 21). Le harnais comprend un passant (19) de maintien de sangle, une sangle dorsale de serrage (20), et une partie (24) de la sangle dorsale (20). La sangle dorsale (20) n'est pas configurée de sorte à permettre, lors de sa traction, une libération de la partie de la section d'emmanchement de dossier (11, 12, 18a, 18b, 20, 21) reçue dans le système de verrouillage (18, 18a, 18b). La sangle dorsale (20) de D1 est une sangle de serrage, permettant un ajustement de la section d'emmanchement de dossier (11, 12, 18a, 18b, 20, 21) sur le siège (22a) de véhicule. Le mécanisme de verrouillage et de libération (18) fonctionne comme une attache de ceinture de sécurité pour véhicule automobile, c'est-à-dire que l'assistant de l'utilisateur doit venir appuyer manuellement sur un bouton de libération présent sur le mécanisme (18), ce qui s'avère plus contraignant et moins aisé qu'avec une sangle.

Un premier objectif de l'invention et de proposer un système pleinement adapté pour maintenir un utilisateur sur un siège.

Un deuxième objectif est de proposer un système de libération rapide limitant les risques en cas d'urgence, notamment d'incendie, tout en étant réutilisable.

Pour atteindre ces objectifs, l'invention propose un harnais de maintien pour siège de véhicule, comprenant
- une section d'emmanchement de dossier configurée pour emmancher un dossier de siège de véhicule, et
- une section d'emmanchement postural configurée pour emmancher un tronc d'utilisateur de sorte à maintenir l'utilisateur sur le siège, la section d'emmanchement postural étant solidaire de la section d'emmanchement de dossier.

Selon un premier aspect, le harnais comprend en outre un système de verrouillage configuré pour recevoir au moins une partie de la section d'emmanchement de dossier, le système de verrouillage comprenant au moins un bouton de libération ou au moins un levier de libération, et un mécanisme de verrouillage configuré pour solidariser ladite partie de la section d'emmanchement de dossier, et la libérer lorsque le bouton de libération est appuyé ou tiré ou le levier de libération est levé, le bouton de libération ou le levier de libération étant configuré pour être disposé hors de portée de l'utilisateur sur le siège.

Avantageusement, le boitier de sécurité et les sections d'emmanchement permettent de sécuriser l'attache de l'utilisateur sur le siège et son maintien.

En outre, le bouton de libération ou le levier de libération forme un système de libération rapide par simple traction de sorte à limiter les risques en cas d'urgence, notamment d'incendie. De plus, ce système est réutilisable.

Le boitier peut recevoir, de manière libérable, une partie supérieure ou inférieure ou les deux.

Selon un mode de réalisation, le système de verrouillage comprend deux structures de bouton de libération associées tête bêche, et la partie supérieure et la partie inférieure comportent chacune une boucle à enficher dans chacune des structures de bouton de libération. En particulier, les structures de bouton de libération sont disposées à l'arrière du dossier de siège.

Selon un autre mode de réalisation, le système de verrouillage comprend un boitier de sécurité configuré pour recevoir ladite partie de la section d'emmanchement de dossier, le boitier comprenant au moins une sangle de libération et ledit mécanisme de verrouillage configuré pour solidariser ladite partie de la section d'emmanchement de dossier, le mécanisme de verrouillage étant configuré pour libérer ladite partie de la section d'emmanchement de dossier lorsqu'une traction est effectuée sur la sangle de libération. En particulier, le boitier de sécurité est disposé à l'arrière du dossier de siège.

Selon d'autres aspects pris isolément ou combinés suivant toutes les combinaisons techniquement réalisables :
- le boitier est configuré pour être disposé sur une face arrière du dossier ; et/ou
- la section d'emmanchement de dossier est configurée pour emmancher le dossier par le dessus et par le dessous ; et/ou
- le boitier de sécurité est configuré pour recevoir une première partie de la section d'emmanchement de dossier à une face supérieure, et une deuxième partie de la section d'emmanchement de dossier à une face inférieure ; et/ou
- la sangle de libération est configurée pour s'étendre jusqu'au dessus du dossier ; et/ou
- le mécanisme de verrouillage comprend une pièce d'appui d'un bouton de libération et une pièce de blocage bloquant la pièce d'appui de manière libérable par une traction de la sangle ; et/ou
- la pièce d'appui de bouton est entrainée par au moins un moyen de rappel, et la pièce de blocage bloque ledit moyen de rappel.

L'invention porte en outre sur un boitier de sécurité pour un harnais de maintien selon l'invention, caractérisé en ce qu'il est configuré pour recevoir au moins une partie de la section d'emmanchement de dossier, le boitier comprenant au moins une sangle de libération et un mécanisme de verrouillage configuré pour solidariser ladite partie de la section d'emmanchement de dossier, et la libérer lorsqu'une traction est effectuée sur la sangle de libération.

L'invention concerne en outre une méthode de sécurisation par un harnais de maintien selon l'invention, comprenant des étapes pour
- emmancher un dossier de siège de véhicule au moyen de ladite section d'emmanchement de dossier,
- disposer au moins une partie de la section d'emmanchement de dossier dans ledit boitier de sécurité de sorte à la solidariser,
- emmancher un tronc d'utilisateur au moyen de ladite section d'emmanchement postural de sorte à maintenir l'utilisateur sur le siège.

Un autre objet de l'invention concerne une méthode de libération d'un harnais de maintien selon l'invention, comprenant une étape pour effectuer une traction sur la sangle de libération de sorte à libérer ladite partie de la section d'emmanchement de dossier.

L'invention sera davantage détaillée par la description de modes de réalisation non-limitatifs, et sur la base des figures annexées, parmi lesquelles :
- [Fig.1] illustre une vue de côté d'un harnais selon un premier mode de réalisation de l'invention en utilisation ;
- [Fig.2] illustre une vue de côté similaire à celle de la figure 1, où une traction est effectuée sur la sangle de libération, et le boitier de sécurité commence à se désolidariser du harnais ;
- [Fig.3] illustre une vue de côté similaire à celles des figures 1 et 2, où une partie inférieur de la section d'emmanchement de dossier est détachée, et le boitier de sécurité est désolidarisé du harnais ;
- [Fig.4] illustre une vue de côté similaire à celles des figures 1 à 3, où un utilisateur est libéré et s'éloigne du siège ;
- [Fig.5] illustre une vue dans l'espace d'un bouton de libération du boitier de sécurité du premier mode de réalisation ;
- [Fig.6] illustre une vue dans l'espace d'une partie du mécanisme de verrouillage du boitier de sécurité du premier mode de réalisation ;
- [Fig.7] illustre une vue en coupe du mécanisme de verrouillage du boitier de sécurité du premier mode de réalisation, avant déverrouillage ;
- [Fig.8] illustre une vue en coupe similaire à celle de la figure 7, mais après déverrouillage ;
- [Fig.9] illustre une vue dans l'espace du boitier de sécurité du premier mode de réalisation ;
- [Fig.10] illustre une vue dans l'espace d'un système de verrouillage dans un deuxième mode de réalisation ; et
- [Fig.11] illustre une vue de côté d'un harnais selon le deuxième mode de réalisation en utilisation.

L'invention concerne un harnais de maintien H. Le harnais H est particulièrement adapté pour un siège de véhicule S.

Ce harnais H est configuré pour assurer un maintien postural (maintien du tronc), principalement pour des personnes souffrant d'un trouble du comportement sur leur siège.

A cet effet, le harnais H comprend une section d'emmanchement postural EP configurée pour emmancher un tronc d'utilisateur U de sorte à maintenir l'utilisateur U sur le siège S.

Le harnais H comprend en outre une section d'emmanchement de dossier ED configurée pour emmancher un dossier D de siège de véhicule S, en particulier d'une face Av avant à une face arrière Ar du dossier de siège D.

Selon une variante, la section d'emmanchement de dossier ED est configurée pour emmancher le dossier D par le dessus et par le dessous.

La section d'emmanchement postural EP est solidaire de la section d'emmanchement de dossier ED, de sorte à solidariser l'utilisateur au siège en utilisation.

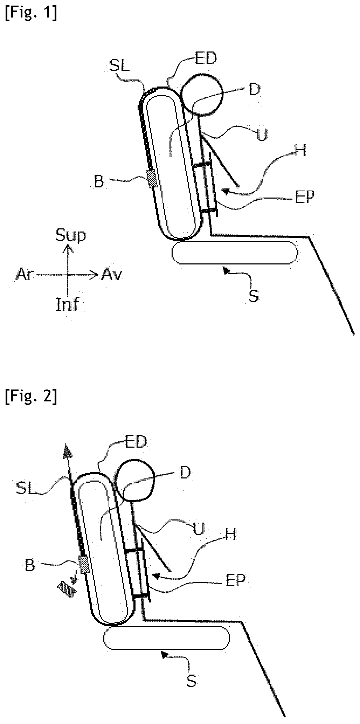

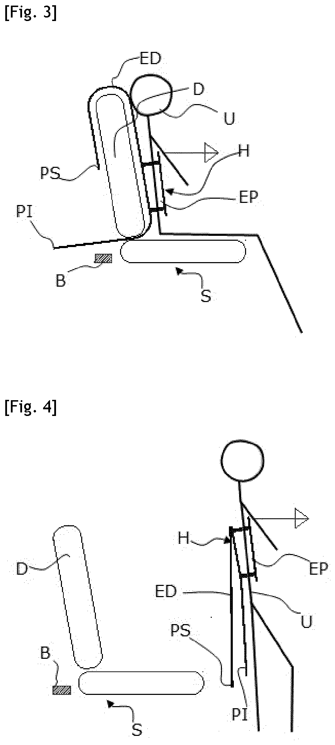

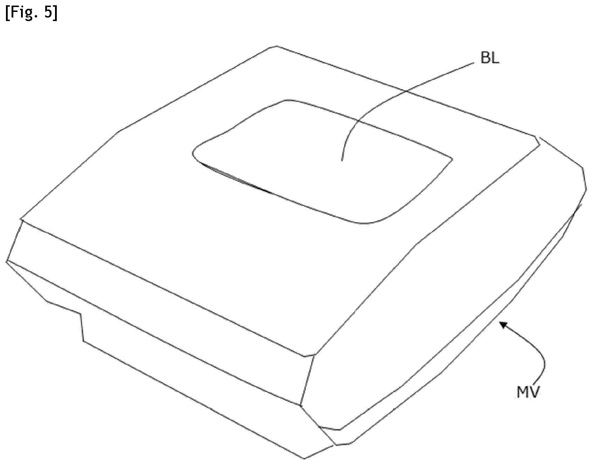

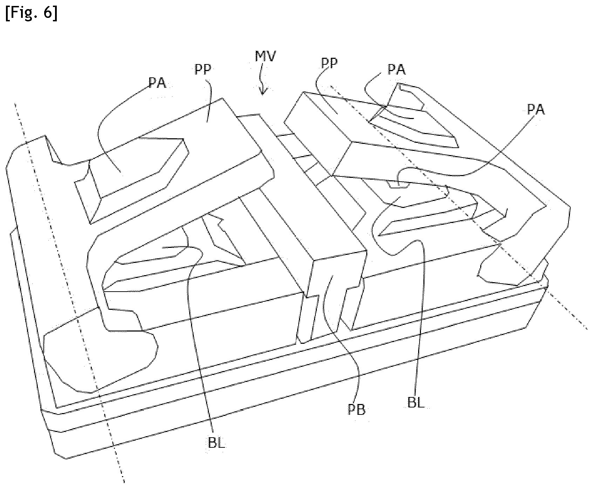

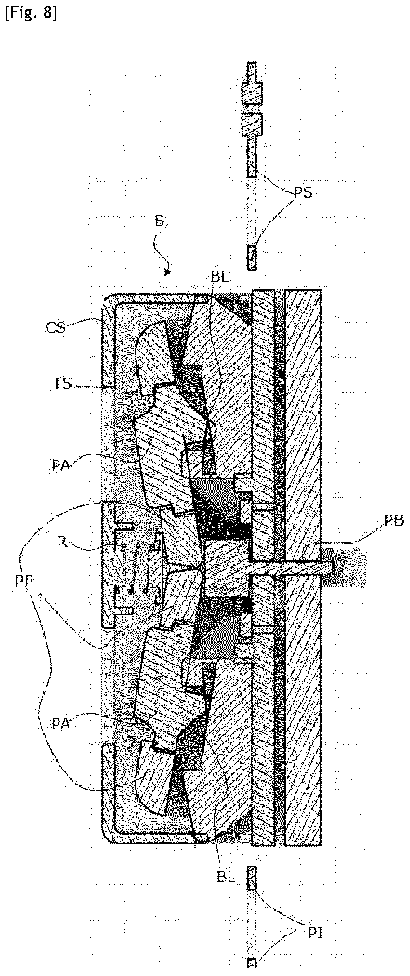

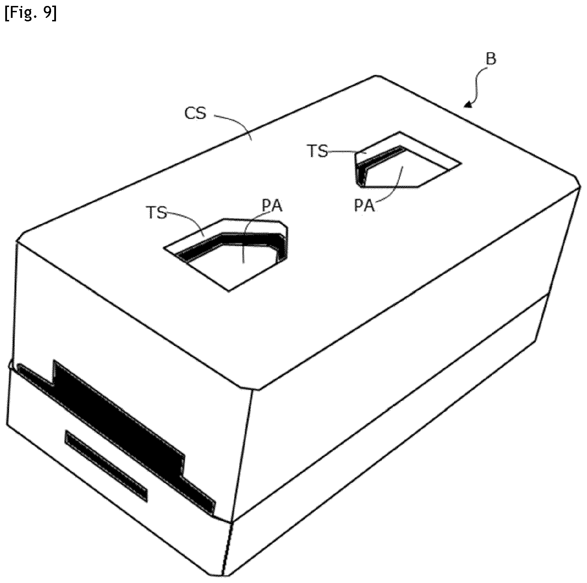

Dans un premier mode de réalisation, visible en figures 1 à 9, le harnais H comprend en outre un boitier de sécurité B particulier permettant le maintien de l'utilisateur. Il s'agit d'un premier système de verrouillage dans le premier mode de réalisation.

Le boitier de sécurité B est configuré pour recevoir au moins une, de préférence deux parties de la section d'emmanchement de dossier ED, à savoir une partie supérieure PS emmanchant le dossier de siège D par le dessus à une face supérieure ; et une partie inférieure PI emmanchant le dossier D par le dessous à une face inférieure. Les deux parties supérieure PS et inférieure PI se réunissent dans le boitier de sécurité B et y sont fixées pour le maintien sur le dossier de siège D.

Le boitier peut être configuré pour recevoir, de manière libérable, la partie supérieure PS ou inférieure PI ou les deux. On peut envisager que seule la partie inférieure par exemple est libérée du boitier et la partie supérieure reste fixée au boitier B. Dans la variante illustrée dans les figures, les deux parties PS, PI sont libérées et le boitier B est complètement séparé de la section d'emmanchement de dossier ED. Cela facilite la libération car le boiter B pourrait gêner la libération.

Le boitier B comprend en outre au moins une sangle de libération SL et un mécanisme de verrouillage MV particulier. Le mécanisme de verrouillage MV est configuré pour solidariser ladite partie de la section d'emmanchement de dossier ED, et la libérer lorsqu'une traction est effectuée sur la sangle de libération SL. Il s'agit des parties supérieure PS et inférieure PI de la section d'emmanchement de dossier ED dans la variante illustrée.

Avantageusement, le boitier de sécurité B et les sections d'emmanchement ED, EP permettent de sécuriser l'attache de l'utilisateur U sur le siège D et son maintien.

En outre, la sangle SL constitue un système de libération rapide par simple traction de sorte à limiter les risques en cas d'urgence, notamment en cas d'incendie. De plus, le système est entièrement réutilisable.

Selon une variante, le boitier B est configuré pour être disposé sur une face arrière Ar du dossier D. Cela permet de sécuriser davantage le système en plaçant le boitier de sécurité B à distance de l'utilisateur U, et évite qu'une manipulation malencontreuse de l'utilisateur U ne déverrouille le système.

Selon une variante, la sangle de libération SL est configurée pour s'étendre jusqu'au dessus du dossier D. En particulier, la sangle SL s'étend du boitier B à l'arrière vers le dessus du dossier D. Cela permet de sécuriser davantage le système en plaçant la sangle SL à distance de l'utilisateur U. En outre, la libération de l'utilisateur U est facilitée sans avoir besoin d'accéder à l'arrière du dossier de siège D pour déverrouiller le boitier B. Cela est très avantageux dans les véhicules standards notamment en berline ou avec une plage arrière où l'accès à l'arrière du dossier D est bloqué ou gêné.

Le mécanisme de verrouillage est basé sur un ou de préférence deux boutons de libération BL. Le bouton de libération est un dispositif sur lequel est inséré ladite partie PS, PI de la section d'emmanchement de dossier ED, et configuré de sorte qu'un appui sur le bouton de libération BL entraine une libération de ladite partie PS, PI.

Ainsi, selon une variante, le mécanisme de verrouillage MV comprend une pièce d'appui PA du bouton de libération BL. Le mécanisme de verrouillage MV comprend en outre une pièce de blocage PB bloquant la pièce d'appui PA de manière libérable par une traction de la sangle SL. En particulier, la pièce de blocage PB bloque la course de la pièce d'appui PA pour l'empêcher d'appuyer le bouton de libération BL. Une fois la pièce de blocage déplacée de manière adéquate par la traction de la sangle de libération, la pièce d'appui PA peut alors appuyer le bouton de libération BL.

Dans la variante illustrée, la pièce d'appui PA de bouton BL est entrainée par au moins un moyen de rappel R, et la pièce de blocage PB bloque ledit moyen de rappel R. Le moyen de rappel R, en particulier un ressort en compression, est configuré à la fois pour appuyer la pièce d'appui PP contre la pièce de blocage PB ici centrale, et pour appuyer la pièce d'appui PA contre le bouton BL ici latéral. Ainsi, la pièce de blocage bloque également le moyen de rappel R.

Un alésage du boitier B permet de disposer une section de la sangle SL de sorte à bloquer la pièce de blocage PB. Ainsi, une traction de la sangle SL, ici vers le haut, libère la pièce de blocage PB qui est déplacée de sorte à libérer à son tour le moyen de rappel R et la pièce d'appui PA qui appuie alors sur le bouton de libération BL.

Cet agencement permet d'avoir un système de verrouillage simplifié verrouillant un ou de préférence deux pièces d'appui PA ; associé à un système de libération simplifié basé sur un appui du ou de préférence des boutons de libération BL.

Le boitier de sécurité B a de préférence un agencement symétrique autour d'un plan avec les deux pièces d'appui PA et les deux boutons de libération BL de part et d'autre du plan de symétrie.

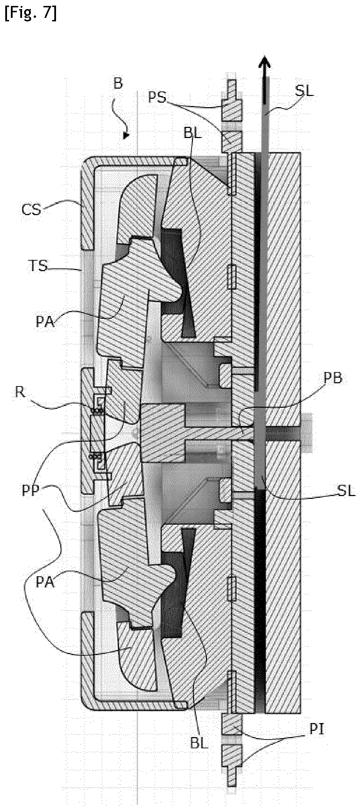

La pièce d'appui PA est de préférence montée pivotante autour d'un axe illustré en figure 7 ou agencée avec une pièce de pivotement PP. Le pivotement de la pièce d'appui PA (ou via la pièce de pivotement PP) vers le bouton de libération BL entraine l'appui du bouton de libération BL et donc la libération de ladite partie PS, PI. Cela permet d'avoir un blocage central avec des axes latéraux, et donc une seule pièce de blocage PB centrale.

Dans la variante illustrée, le boitier de sécurité B comporte un couvercle supérieur CS et un socle inférieur. Le couvercle supérieur CS comporte un trou supérieur TS en regard de la pièce d'appui PA. Cet agencement permet d'effectuer un appui manuel ou avec un outil en passant par le trou supérieur TS, par exemple en cas de dysfonctionnement après une traction de la sangle de libération SL.

L'invention porte en outre sur le boitier de sécurité dudit harnais H. Les éléments du boitier de sécurité ont déjà été détaillés plus haut.

L'invention concerne en outre méthode de sécurisation par un harnais de maintien H tel que décrit précédemment. La méthode de sécurisation comprend les étapes de mise en place du harnais H.

Plus précisément, la méthode de sécurisation comprend une étape pour emmancher un dossier D de siège de véhicule S d'une face avant à une face arrière du dossier de siège D, au moyen de ladite section d'emmanchement de dossier ED.

La méthode de sécurisation comprend en outre une étape pour disposer au moins une partie PS, PI de la section d'emmanchement de dossier ED dans ledit boitier de sécurité B de sorte à la solidariser.

La méthode de sécurisation comprend en outre une étape pour emmancher un tronc d'utilisateur U au moyen de ladite section d'emmanchement postural EP de sorte à maintenir l'utilisateur U sur le siège S.

L'invention porte en outre sur une méthode de libération d'un harnais de maintien H tel que décrit précédemment. La méthode de libération comprend toute étape mise en oeuvre pour libérer un utilisateur attaché au moyen du harnais H.

Plus précisément, la méthode de libération comprend une étape pour effectuer une traction sur la sangle de libération SL de sorte à libérer ladite, en particulier lesdites parties PS, PI de la section d'emmanchement de dossier ED.

Plus particulièrement, la traction se fait par le dessus du dossier D, vers le haut ce qui enclenche le déverrouillage du mécanisme de verrouillage MV et libère ladite partie PS, PI.

Ce premier mode de réalisation est pleinement adapté à une utilisation dans des véhicules où un assistant de l'utilisateur n'a pas accès à l'arrière du dossier D notamment dans les véhicules standards en berline ou ayant une plage arrière. L'assistant ne peut donc pas appuyer sur les boutons de libération BL en situation d'urgence. Avantageusement, il a juste besoin de tirer la sangle SL comme peut l'illustrer la figure 2.

On peut envisager une variante du premier mode de réalisation (non représentée) avec un boitier de sécurité et un autre mécanisme de verrouillage associé à la sangle. La sangle peut par exemple être associée à un bouton de libération à tirer pour déverrouiller le mécanisme, ou peut être associée à un levier de libération à lever dans un sens donné (pouvant être vers le haut, le bas ou le côté) pour déverrouiller le mécanisme.

Bien entendu, on peut envisager une combinaison de bouton(s) et/ou de levier(s) de libération.

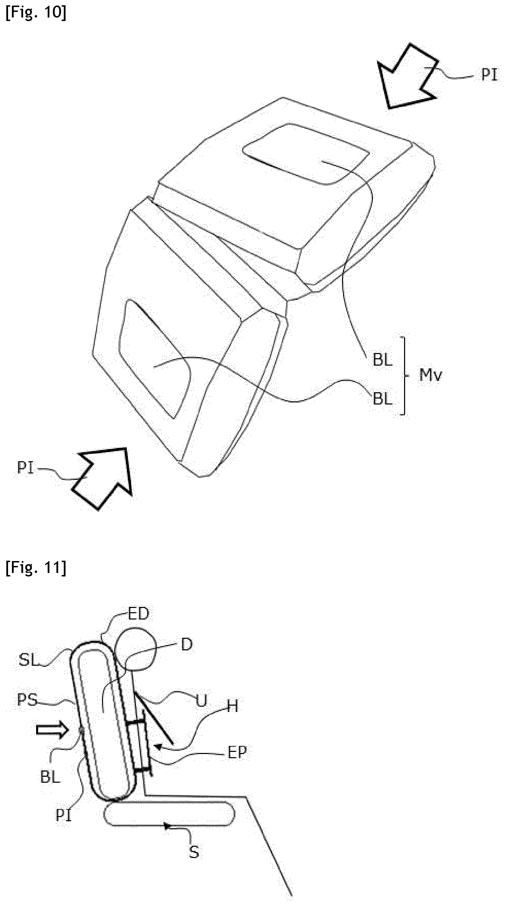

Dans un deuxième mode de réalisation, visible en figures 10 et 11, le harnais H ne comprend pas de sangle de libération, et ne comprend de préférence pas de boitier B. Dans ce deuxième mode de réalisation, le système de verrouillage comprend deux structures de bouton de libération comportant chacune un bouton de libération BL. Les structures de bouton de libération sont solidarisées, par exemple cousues ou collées, tête bêche. En outre, la partie supérieure PS et la partie inférieure PI comportent chacune une boucle à enficher dans la structure de bouton de libération.

Ce mode de réalisation est pleinement adapté à une utilisation dans des véhicules où un assistant de l'utilisateur a aisément accès à l'arrière du dossier D comme c'est le cas dans des véhicules spécialisés. L'assistant peut donc appuyer sur les boutons de libération BL sans gêne.

De même, on peut envisager une variante du deuxième mode de réalisation (non représentée) avec un autre mécanisme de verrouillage basé sur un bouton de libération à tirer pour déverrouiller le mécanisme, ou un levier de libération à lever dans un sens donné pour déverrouiller le mécanisme.

Bien entendu, on peut envisager une combinaison de bouton(s) et/ou de levier(s) de libération.

## Revendications

1. Harnais de maintien (H) pour siège de véhicule (S), comprenant
- une section d'emmanchement de dossier (ED) configurée pour emmancher un dossier de siège (D) de véhicule,
- une section d'emmanchement postural (EP) configurée pour emmancher un tronc d'utilisateur (U) de sorte à maintenir l'utilisateur (U) sur le siège (S), la section d'emmanchement postural (EP) étant solidaire de la section d'emmanchement de dossier (ED),
le harnais (H) comprenant en outre
- un système de verrouillage (B ; BL) configuré pour recevoir au moins une partie (PS, PI) de la section d'emmanchement de dossier (ED), le système de verrouillage (B ; BL) comprenant au moins un bouton de libération (BL) ou au moins un levier de libération, et un mécanisme de verrouillage (MV) configuré pour solidariser ladite partie (PS, PI) de la section d'emmanchement de dossier (ED), et la libérer lorsque le bouton de libération (BL) est appuyé ou tiré ou le levier de libération est levé, le bouton de libération (BL) ou le levier de libération étant configuré pour être disposé hors de portée de l'utilisateur (U) sur le siège (S) ;
**caractérisé en ce que** le système de verrouillage comprend un boitier de sécurité (B) configuré pour recevoir ladite partie (PS, PI) de la section d'emmanchement de dossier (ED), le boitier (B) comprenant au moins une sangle de libération (SL) et ledit mécanisme de verrouillage (MV) configuré pour solidariser ladite partie (PS, PI) de la section d'emmanchement de dossier (ED), le mécanisme de verrouillage étant configuré pour libérer ladite partie de la section d'emmanchement de dossier lorsqu'une traction est effectuée sur la sangle de libération (SL).

2. Harnais de maintien selon la revendication précédente, **caractérisé en ce que** le système de verrouillage comprend deux structures de bouton de libération solidarisées tête bêche, et **en ce que** la partie supérieure (PS) et la partie inférieure (PI) comportent chacune une boucle à enficher dans chacune des structures de bouton de libération.

3. Harnais de maintien selon l'une des revendications précédentes, **caractérisé en ce que** le boitier (B) est configuré pour être disposé sur une face arrière (Ar) du dossier (D).

4. Harnais de maintien selon l'une des revendications précédentes, **caractérisé en ce que** la sangle de libération (SL) est configurée pour s'étendre jusqu'au dessus du dossier (D).

5. Harnais de maintien selon l'une des revendications précédentes, **caractérisé en ce que** le mécanisme de verrouillage (MV) comprend une pièce d'appui (PA) d'un bouton de libération (BL) et une pièce de blocage (PB) bloquant la pièce d'appui (PA) de manière libérable par une traction de la sangle (SL).

6. Harnais de maintien selon la revendication précédente, **caractérisé en ce que** la pièce d'appui (PA) de bouton (BL) est entrainée par au moins un moyen de rappel (R), et la pièce de blocage (PB) bloque ledit moyen de rappel (R).

7. Méthode de sécurisation par un harnais de maintien (H) selon l'une des revendications 1 à 6, comprenant des étapes pour
- emmancher un dossier de siège de véhicule au moyen de ladite section d'emmanchement de dossier (ED),
- disposer au moins une partie (PS, PI) de la section d'emmanchement de dossier (ED) dans ledit boitier de sécurité (B) de sorte à la solidariser,
- emmancher un tronc d'utilisateur (U) au moyen de ladite section d'emmanchement postural (EP) de sorte à maintenir l'utilisateur (U) sur le siège (S).

8. Méthode de libération d'un harnais de maintien selon l'une des revendications 1 à 6, comprenant une étape pour effectuer une traction sur la sangle de libération (SL) de sorte à libérer ladite partie (PS, PI) de la section d'emmanchement de dossier (ED).

## Patentansprüche

1. Haltegurt (H) für einen Fahrzeugsitz (S), umfassend
- einen Rückenlehnenanpassabschnitt (ED), der zum Anpassen einer Fahrzeugsitzrückenlehne (D) konfiguriert ist,
- einen Haltungsanpassabschnitt (EP), der zum Anpassen eines Rumpfes (U) eines Benutzers konfiguriert ist, um den Benutzer (U) auf dem Sitz (S) zu halten, wobei der Haltungsanpassabschnitt (EP) an dem Rückenlehnenanpassabschnitt (ED) befestigt ist,
der Gurt (H) ferner umfassend:
- ein Verriegelungssystem (B; BL), das zum Aufnehmen mindestens eines Teils (PS, PI) des Rückenlehnenanpassabschnitts (ED) konfiguriert ist, das Verriegelungssystem (B; BL) umfassend mindestens einen Freigabeknopf (BL) oder mindestens einen Freigabehebel und einen Verriegelungsmechanismus (MV), der zum Befestigen des Teils (PS, PI) des Rückenlehnenanpassabschnitts (ED) und Freigeben davon konfiguriert ist, wenn der Freigabeknopf (BL) gedrückt oder gezogen wird oder der Freigabehebel angehoben wird, wobei der Freigabeknopf (BL) oder der Freigabehebel zum Angeordnetsein außerhalb einer Reichweite des Benutzers (U) auf dem Sitz (S) konfiguriert ist;
**dadurch gekennzeichnet, dass** das Verriegelungssystem ein Sicherheitsgehäuse (B) umfasst, das zum Aufnehmen des Teils (PS, PI) des Rückenlehnenanpassabschnitts (ED) konfiguriert ist, das Gehäuse (B) umfassend mindestens ein Freigabeband (SL) und den Verriegelungsmechanismus (MV), der zum Befestigen des Teils (PS, PI) des Rückenlehnenanpassabschnitts (ED) konfiguriert ist, wobei der Verriegelungsmechanismus zum Freigeben des Teils des Rückenlehnenanpassabschnitts konfiguriert ist, wenn ein Zug auf das Freigabeband (SL) ausgeübt wird.

2. Haltegurt nach dem vorstehenden Anspruch,
**dadurch gekennzeichnet, dass** das Verriegelungssystem zwei entgegengesetzt befestigte Freigabeknopfstrukturen umfasst, und **dass** der obere Teil (PS) und der untere Teil (PI) jeweils eine Schlaufe umfassen, um in jede der Freigabeknopfstrukturen eingefädelt zu werden.

3. Haltegurt nach einem der vorstehenden Ansprüche,
**dadurch gekennzeichnet, dass** das Gehäuse (B) zum Angeordnetwerden auf einer hinteren Fläche (Ar) der Rückenlehne (D) konfiguriert ist.

4. Haltegurt nach einem der vorstehenden Ansprüche,
**dadurch gekennzeichnet, dass** das Freigabeband (SL) zum Verlaufen bis über die Rückenlehne (D) konfiguriert ist.

5. Haltegurt nach einem der vorstehenden Ansprüche,
**dadurch gekennzeichnet, dass** der Verriegelungsmechanismus (MV) ein Auflagestück (PA) eines Freigabeknopfes (BL) und ein Blockierstück (PB) umfasst, das das Auflagestück (PA) so blockiert, dass es durch ein Ziehen an dem Band (SL) lösbar ist.

6. Haltegurt nach dem vorstehenden Anspruch,
**dadurch gekennzeichnet, dass** das Auflagestück (PA) des Knopfes (BL) durch mindestens ein Rückstellmittel (R) angetrieben wird und das Blockierstück (PB) das Rückstellmittel (R) blockiert.

7. Verfahren zum Sichern durch einen Haltegurt (H) nach einem der Ansprüche 1 bis 6, umfassend die Schritte zum
- Anpassen einer Fahrzeugsitzrückenlehne mittels des Rückenlehnenanpassabschnitts (ED),
- Anordnen mindestens eines Teils (PS, PI) des Rückenlehnenanpassabschnitts (ED) in dem Sicherheitsgehäuse (B), um ihn zu befestigen,
- Anpassen des Rumpfes (U) eines Benutzers mittels des Haltungsanpassabschnitts (EP), um den Benutzer (U) auf dem Sitz (S) zu halten.

8. Verfahren zum Freigeben eines Haltegurts nach einem der Ansprüche 1 bis 6, umfassend einen Schritt des Ausübens eines Ziehens an dem Freigabeband (SL), um den Teil (PS, PI) des Rückenlehnenanpassabschnitts (ED) freizugeben.

## Claims

1. Restraining harness (H) for a vehicle seat (S), comprising
- a portion (ED) for being fitted to a backrest, which is configured to be fitted to a backrest (D) of a vehicle seat,
- a portion (EP) for being fitted to a posture, which is configured to be fitted to a torso of a user (U) so as to restrain the user (U) on the seat (S), the portion (EP) for being fitted to a posture being secured to the portion (ED) for being fitted to a backrest,
the harness (H) further comprising
- a locking system (B; BL) which is configured to receive at least one part (PS, PI) of the portion (ED) for being fitted to a backrest, the locking system (B; BL) comprising at least one release button (BL) or at least one release lever, and a locking mechanism (MV) which is configured to secure the part (PS, PI) of the portion (ED) for being fitted to a backrest and release it when the release button (BL) is pressed or pulled or the release lever is raised, the release button (BL) or release lever being configured to be arranged out of reach of the user (U) on the seat (S);
**characterized in that** the locking system comprises a safety housing (B) which is configured to receive the part (PS, PI) of the portion (ED) for being fitted to a backrest, the housing (B) comprising at least one release strap (SL) and the locking mechanism (MV) which is configured to secure the part (PS, PI) of the portion (ED) for being fitted to a backrest, the locking mechanism being configured to release the part of the portion for being fitted to a backrest when the release strap (SL) is pulled.

2. Restraining harness according to the preceding claim, **characterized in that** the locking system comprises two release button structures which are joined head to foot, and **in that** the upper part (PS) and the lower part (PI) each have a loop to be plugged into each of the release button structures.

3. Restraining harness according to either of the preceding claims, **characterized in that** the housing (B) is configured to be arranged on a rear face (Ar) of the backrest (D).

4. Restraining harness according to any of the preceding claims, **characterized in that** the release strap (SL) is configured to extend to the top of the backrest (D).

5. Restraining harness according to any of the preceding claims, **characterized in that** the locking mechanism (MV) comprises a support piece (PA) of a release button (BL) and a blocking piece (PB) which blocks the support piece (PA) in a releasable manner by pulling the strap (SL).

6. Restraining harness according to the preceding claim, **characterized in that** the support piece (PA) of the button (BL) is driven by at least one return means (R), and the blocking piece (PB) blocks said return means (R).

7. Method for being secured by means of a restraining harness (H) according to any of claims 1 to 6, comprising steps of
- fitting a backrest of a vehicle seat with the portion (ED) for being fitted to a backrest,
- arranging at least one part (PS, PI) of the portion (ED) for being fitted to a backrest in the safety housing (B) so as to secure it,
- fitting a torso of a user (U) with the portion (EP) for being fitted to a posture so as to restrain the user (U) on the seat (S).

8. Method for releasing a restraining harness according to any of claims 1 to 6, comprising a step of pulling on the release strap (SL) so as to release the part (PS, PI) of the portion (ED) for being fitted to a backrest.
